# FASCICULE DE BREVET EUROPEEN

(11) **EP 0 378 969 B1**
(45) Date de publication et mention de la délivrance du brevet: **16.03.1994**
(21) Numéro de dépôt: 89810984.8
(22) Date de dépôt: 27.12.1989
(51) Int. Cl.: G02C 5/22

(54) **Charnière de lunettes**
Brillenscharnier
Spectacle hinge

(30) Priorité: 16.01.1989 CH 121/89
(43) Date de publication de la demande: 25.07.1990
(73) Titulaire: LN INDUSTRIES S.A., 1205 Genève (CH)
(72) Inventeur: Guy, Gabriel, F-74140 Douvaine (FR)
(74) Mandataire: Steen, Dieter Markus

(56) Documents cités:
- EP-A- 0 091 573
- EP-A- 0 166 822
- DE-A- 2 242 044
- FR-A- 2 250 127
- FR-A- 2 466 788
- FR-A- 2 614 953

## Description

On connaît déjà des charnières de lunettes comprenant un ressort à boudin pour fixer élastiquement au moins les positions repliées et déployées par rapport à la monture des lunettes, ce ressort étant logé dans un boîtier solidaire de la branche, ce boîtier présentant une section droite sensiblement rectangulaire (voir par example EP-A-0 091 573).

La tendance actuelle est de réaliser des charnières élastiques aussi peu volumineuses que possible, mais les dimensions de cette charnière est déterminée par celle du ressort et du boîtier, dans lequel ce ressort est logé, dimensions qui ne peuvent être guère diminuées, sans affaiblir la force du ressort d'une manière incompatible avec le bon fonctionnement de la charnière.

L'invention a pour but de permettre une diminution sensible du genre précité, tout en évitant d'affaiblir le ressort.

A cet effet, la charnière faisant l'objet de l'invention est caractérisée en ce qu'une projection axiale du ressort sur un plan perpendiculaire a son axe donne une image, dont deux axes perperndicualires entre eux sont de longueurs différentes, de façon que son enveloppe corresponde sensiblement à la section interne du boîtier.

Le dessin annexé représente schématiquement et à titre d'exemple, une forme d'exécution de la charnière faisant l'objet de l'invention.

La figure 1 est une vue en coupe partielle de la charnière lorsque la branche est ouverte en position d'utilisation.

La figure 2 représente la charnière lorsqu'on a dépassé élastiquement la position d'ouverture normale.

La figure 3 est une coupe selon la ligne III-III de la figure 1.

La charnière représentée comprend deux parties 1 et 2, articulées l'une sur l'autre, au moyen d'une vis-pivot 3.

La partie 2 présente une patte recourbée 4 destinée à être soudée sur une partie face de la monture qui est en métal.

La partie 1 de la charnière est montée élastiquement à l'extrémité d'une branche métallique 5 et peut coulisser longitudinalement dans un boîtier 6 de section générale rectangulaire, ce boîtier 6 étant soudé sur la branche 5.

La partie 1 est solidaire d'une pièce mobile 7 formant un coulisseau engagé partiellement à l'intérieur du boîtier 6 et soumise à la traction d'un ressort 8. L'accrochage du ressort 8 sur le coulisseau 7 est réalise en introduisant une boucle d'extrémité 9 du ressort 8 autour d'un téton 10 orienté transversalement par rapport à l'axe longitudinal de la branche 5.

Pour faciliter le montage de la branche élastique, le téton 10 présente un trou borgne 11, de sorte qu'une partie du téton est constituée simplement par une paroi cylindrique qui est déformée en 12, par exemple à l'aide d'un poinçon, pour retenir en place la boucle 9 par rivetage.

L'autre extrémité du ressort 8 est accrochée sur une pièce 13, destinée à être introduite dans le boîtier 6, cette pièce présentant un téton 14 analogue au téton 10 du coulisseau 7. Il permet l'accrochage du ressort 8 par une boucle 15 prévue a son extrémité après l'introduction de la pièce 13 avec le ressort 8 dans le boîtier 6 dans l'ouverture avant de celui-ci. On fixe ensuite cette pièce 13 au moyen d'une vis 16, qui s'engage dans un alésage fileté 17, la tête de cette vis 16 prenant appui contre une portion 18 du boîtier.

Il y a lieu de remarquer que l'extrémité avant du boîtier 6 présente deux rampes 19 coopérant avec une partie 20 de la pièce 2 de la charnière, de manière à déterminer élastiquement et de façon connue la position repliée et la position d'ouverture normale de la branche. Pour passer d'une de ces positions à l'autre, le coulisseau 7 doit se déplacer vers l'extérieur du boîtier 6 en exerçant une traction sur le ressort 8.

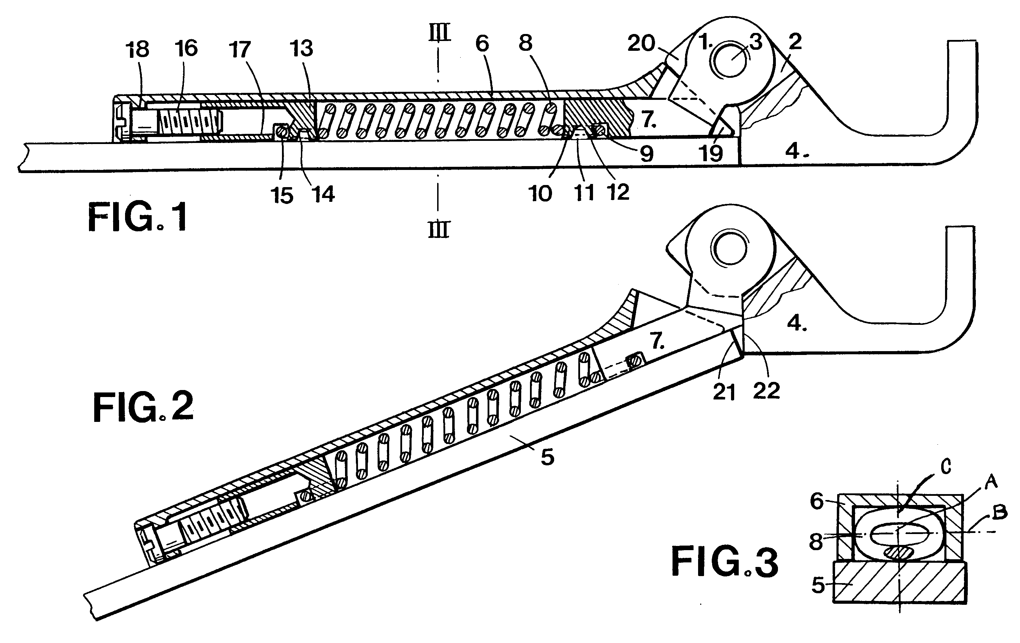

De même, comme représenté à la figure 2 on peut, toujours de façon connue, dépasser la position d'ouverture normale de la branche 5 en exerçant une traction supplémentaire sur le ressort 8 au moyen du coulisseau 7, l'extrémité 21 de la branche butant alors contre une partie 22 de la patte recourbée 4.

Comme le montre bien la figure 3, le ressort 8 donne, en projection axiale sur un plan perpendiculaire a son axe longitudinal A, une image dont deux axes B et C présentent des longueurs différentes, de façon que l'enveloppe du ressort corresponde sensiblement à la section interne du boîtier 6. De plus, comme cela se voit bien à la figure 1, les spires du ressort à boudin 8 sont inclinées dans un même sens par rapport à l'axe longitudinal du ressort. Ces deux mesures se complètent pour permettre d'utiliser un ressort de force suffisante dans un boîtier 6, dont l'épaisseur est aussi faible que possible. Toutefois, on pourrait se contenter seulement de l'une de ces deux mesures.

Il est clair que le principe d'un ressort à boudin de forme non-circulaire peut être appliqué à toutes sortes de charnière pour lunettes, que le ressort travaille à l'extension ou à la compression. Des charnières à lunettes élastiques sont, par exemple, décrites dans les brevets suisses Nos 574.614 / 622.623 / 664.448 / 664.449.

## Revendications

1. Charnière de lunettes comprenant un ressort à boudin pour fixer élastiquement au moins les positions repliées et déployées des branches par rapport à la monture des lunettes, ce ressort étant logé dans un boîtier solidaire de la branche, ce boîtier présentant une section droite sensiblement rectangulaire, **caractérisée** en ce qu'une projection axiale du ressort sur un plan perpendiculaire a son axe donne une image, dont deux axes perpendiculaires entre eux sont de longueurs différentes, de façon que l'enveloppe du ressort corresponde sensiblement à la section interne du boîtier.

2. Charnière selon la revendication 1, **caractérisée** en ce que les spires du ressort à boudin sont inclinées dans un même sens par rapport à l'axe longitudinal du ressort.

3. Charnière selon la revendication 1, **caractérisée** en ce que les spires du ressort sont de forme ovale.

4. Charnière selon une des revendications 1 à 3, dans laquelle le ressort travaille à l'extension pour solliciter vers l'intérieur du boîtier une des parties de la charnière, **caractérisée** en ce que cette partie de charnière présente un téton orienté transversalement à l'axe de la branche de lunettes et disposé à l'intérieur du boîtier, ce téton permettant l'accrochage d'une bouche d'extrémité du ressort.

5. Charnière selon la revendication 4, **caractérisée** en ce que le téton présente un trou borgne pour qu'une partie du téton soit constituée simplement d'une paroi cylindrique, destinée à être déformée pour retenir la boucle du ressort par rivetage.

6. Charnière selon la revendication 4, **caractérisée** en ce que l'autre extrémité du ressort présente une bouche engagée sur un téton prévu sur une pièce susceptible d'être introduite dans le boîtier, des moyens étant prévus pour retenir la pièce dans le boîtier.

7. Charnière selon la revendication 6, **caractérisée** en ce que les moyens pour retenir la pièce dans le boîtier sont constitués par une vis s'étendant longitudinalement dans le boîtier, la tête de cette vis venant prendre appui contre une portion du boîtier, cette vis étant engagée dans un alésage fileté prévu dans ladite pièce.

## Claims

1. Eyeglass hinge comprising a coil spring to establish elastically at least the folded and extended positions of the bows relative to the frame of eyeglasses, the spring being disposed in a casing integral with the bow, this casing having a substantially rectangular cross section, characterized in that the axial projection of the spring on a plane perpendicular to its axis has a shape whose two axes perpendicular to each other are of different lengths, whereby the envelope of the spring corresponds substantially to the internal cross section of the casing.

2. Hinge according to claim 1, characterized in that the turns of the coil spring are inclined in the same direction relative to the longitudinal axis of the spring.

3. Hinge according to claim 1, characterized in that the coils of the spring are of oval shape.

4. Hinge according to one of claims 1 to 3, in which the spring acts when stretched to urge one of the portions of the hinge inwardly of the casing, characterized in that this portion of the hinge has a pin disposed transversely to the axis of the eyeglass bow and disposed within the casing, this pin serving to secure an end coil of the spring.

5. Hinge according to claim 4, characterized in that the pin has a blind hole such that a portion of the pin will be constituted simply by a cylindrical wall intended to be deformed to retain the spring coil by riveting.

6. Hinge according to claim 4, characterized in that the other end of the spring has a coil engaged on a pin provided on a member adapted to be introduced into the casing, means being provided to retain the portion in the casing.

7. Hinge according to claim 6, characterized in that the means to retain the portion in the casing are constituted by a screw extending longitudinally in the casing, the head of this screw coming into supporting contact against a portion of the casing, this screw being engaged in a screw threaded hole provided in said portion.

## Patentansprüche

1. Brillenscharnier mit einer Schraubenfeder um zumindest die zurückgeklappte und auseinandergeklappte Lage der Bügel gegenüber dem Brillengestell elastisch festzulegen, wobei diese Feder in einem mit dem Bügel festverbundenen Gehäuse angeordnet ist, und wobei dieses Gehäuse einen etwa rechteckigen Querschnitt aufweist, dadurch gekennzeichnet, dass die Axialprojektion der Feder auf eine zu seiner Achse senkrecht liegenden Fläche eine Abbildung gibt, deren zwei senkrecht zueinander stehenden Achsen verschiedene Längen aufweisen, so dass die Umhüllende der Feder etwa dem inneren Querschnitt des Gehäuses entspricht.

2. Scharnier nach Anspruch 1, dadurch gekennzeichnet, dass die Windungen der Schraubenfeder gegenüber der Längsachse der Feder in gleicher Richtung geneigt sind.

3. Scharnier nach Anspruch 1, dadurch gekennzeichnet, dass die Windungen der Feder eine ovale Form aufweisen.

4. Scharnier nach den Ansprüchen 1 bis 3, bei welchen die Feder unter Streckung arbeitet, um einen der beiden Teile des Scharniers in Richtung des Gehäuse zu ziehen, dadurch gekennzeichnet, dass dieser Scharnierteil einen Zapfen aufweist, der quer zur Achse des Brillenbügels gerichtet im Inneren des Gehäuses angeordnet ist, wobei dieser Zapfen das Anhängen einer Endwindung der Feder ermöglicht.

5. Scharnier nach Anspruch 4, dadurch gekennzeichnet, dass der Zapfen ein Sackloch aufweist, so dass ein Teil des Zapfens einfacherweise aus einer Zylinderwand besteht, welche dazu bestimmt ist, verformt zu werden, um die Windung der Feder mittels Vernietung festzuhalten.

6. Scharnier nach Anspruch 4, dadurch gekennzeichnet, dass das andere Ende der Feder eine Windung aufweist, die auf einem Zapfen angebracht ist, der auf einem Teilstück vorgesehen ist, das in das Gehäuse eingeführt werden kann, wobei Mittel vorgesehen sind, um das Teilstück im Gehäuse festzuhalten.

7. Scharnier nach Anspruch 6, dadurch gekennzeichnet, dass die Mittel zum Festhalten des Teilstücks im Gehäuse aus einer Schraube bestehen, die sich längs im Gehäuse erstreckt, wobei der Kopf dieser Schraube sich auf einen Teil des Gehäuses abstützt, und wobei die Schraube in eine im sogenannten Teilstück vorgesehene mit Gewinde versehene Bohrung eingefügt ist.
